# EUROPÄISCHE PATENTSCHRIFT

(11) **EP 1 789 292 B1**
(45) Veröffentlichungstag und Bekanntmachung des Hinweises auf die Patenterteilung: **10.09.2008**
(21) Anmeldenummer: 05762996.6
(22) Anmeldetag: 13.07.2005
(51) Int. Cl.: B60R 21/34

(54) **VERFAHREN UND VORRICHTUNG ZUR ERZEUGUNG EINES AUSLÖSESIGNALS FÜR EINE FUSSGÄNGERSCHUTZVORRICHTUNG**
METHOD AND APPARATUS FOR GENERATING A TRIGGERING SIGNAL FOR A DEVICE PROTECTING PEDESTRIANS
PROCEDE ET DISPOSITIF POUR GENERER UN SIGNAL DECLENCHEUR POUR UN DISPOSITIF DE PROTECTION DE PIETONS

(30) Priorität: 02.09.2004 DE 102004042467
(43) Veröffentlichungstag der Anmeldung: 30.05.2007
(73) Patentinhaber: ROBERT BOSCH GMBH, 70442 Stuttgart (DE)
(72) Erfinder: MACK, Frank, 70376 Stuttgart (DE)
(86) Internationale Anmeldenummer: PCT/EP2005/053360
(87) Internationale Veröffentlichungsnummer: WO 2006/024576

(56) Entgegenhaltungen:
- DE-A1- 10 256 952
- GB-A- 2 356 076
- GB-A- 2 376 118

## Beschreibung

### Stand der Technik

Die Erfindung geht aus von einem Verfahren zur Erzeugung eines Auslösesignals für eine Fußgängerschutzvorrichtung nach der Gattung des unabhängigen Patentanspruchs 1 und von einer zugehörigen Vorrichtung nach des Gattung des unabhängigen Anspruchs 8.

Durch die Ankündigung der Einführung eines EU-Gesetzes zur Reduzierung von Verletzungen eines Fußgängers bei einem Zusammenstoß zwischen einem Fußgänger und einem Fahrzeug, müssen neue Fahrzeug so konstruiert werden, dass die Verletzungen des Fußgängers bei einer Kollision innerhalb der in diesem EU-Gesetz geforderten Grenzen bleiben.

Eine erste Strategie zur Reduzierung von Verletzungen von Fußgängern zielt darauf ab, durch Änderungen an der Stoßstange und am Design des Fahrzeuges eine Knautschzone für den Fußgänger zu schaffen, um somit durch eine passive Lösung die Verletzungsgefahr zu reduzieren.

Eine zweite Strategie versucht durch eine geeignete Sensorik den Aufprall eines Fußgängers zu erkennen und anschließendes aktives Ansteuern einer Fußgängerschutzvorrichtung, wie beispielsweise von Außenairbags an den A-Säulen und/oder durch Anheben der Motorhaube die benötigte Knautschzone zu schaffen. Bei der aktiven Lösung können die verschiedensten Sensorprinzipien von Beschleunigungs-, Druck-, Klopf-, piezoelektrischen bis optischen Sensoren etc. benutzt werden.

Aus GB 2 376 118 A, die dem Oberbegriff des Anspruchs 1 bzw. 8 entspricht, ist eine Anordnung zur Erkennung eines Fußgängeraufpralls bekannt, bei der im Stoßfängerbereich zwei Beschleunigungssensoren auf beiden Seiten des Fahrzeugs verwendet werden. In Abhängigkeit von diesen Beschleunigungssignalen, sowie einer zusätzlichen Kontaktsensorik und der Eigengeschwindigkeit werden Fußgängerschutzmittel angesteuert.

### Vorteile der Erfindung

Das erfindungsgemäße Verfahren zur Erzeugung eines Auslösesignals für eine Fußgängerschutzvorrichtung mit den Merkmalen des unabhängigen Patentanspruchs 1 und die entsprechende Vorrichtung nach Anspruch 8 haben demgegenüber den Vorteil, dass durch eine Merkmalsextraktion und/ eine Offseterkennung und eine zusätzliche Plausibilitätsüberprüfung zur Erzeugung eines Auslösesignals eine sichere und robustere Ansteuerung der Fußgängerschutzvorrichtung ermöglicht wird. Dadurch wird ein optimaler Schutz der Fußgänger bei gleichzeitiger Minimierung der Kosten gewährleistet, die durch eine ungewollte Auslösung der Fußgängerschutzvorrichtung, beispielsweise bei Kollisionen mit anderen Objekten, entstehen können.

Die Kollision mit dem Objekt kann beispielsweise dadurch erkannt werden, dass die Sensordaten, welche eine Beschleunigung repräsentieren, eine vorgegebene Schwelle, beispielsweise eine Rauschschwelle übersteigen. Alternativ können auch komplexere Verfahren zur Kollisionserkennung eingesetzt werden.

Das erfindungsgemäße Verfahren entscheidet in vorteilhafter Weise ausgehend von den verfügbaren Sensorsignalen ob in der vorliegenden Situation nach einer erkannte Kollision mit einem Objekt eine Auslösung bzw. eine Aktivierung der Fußgängerschutzvorrichtung erforderlich ist oder nicht.

Die erfindungsgemäße Vorrichtung zur Erzeugung eines Auslösesignals für eine Fußgängerschutzvorrichtung mit den Merkmalen des unabhängigen Patentanspruchs 8 umfasst die erforderlichen Mittel zur Durchführung des erfindungsgemäßen Verfahrens zur Erzeugung eines Auslösesignals für eine Fußgängerschutzvorrichtung.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Erzeugung eines Auslösesignals für eine Fußgängerschutzvorrichtung und der im unabhängigen Patentanspruch 9 angegebenen zugehörigen Vorrichtung möglich.

Besonders vorteilhaft ist, dass bei der Auslöseüberprüfung ein Zählerstand berücksichtigt wird, der die Zeitdauer seit dem Zeitpunkt der erkannten Kollision misst. Dadurch kann der Zeitpunkt bestimmt werden, zu dem eine Entscheidung zu treffen ist.

Weiterhin ist es von Vorteil, dass die Kollision mit einem Fußgänger dadurch erkannt wird, dass sich die extrahierten Merkmale in einem auslöserelevanten Bereich befinden, dessen Obergrenze und/oder Untergrenze durch die Offseterkennung und/oder den Zählerstand und/oder eine Fahrzeugeigengeschwindigkeit und/oder eine Relativgeschwindigkeit bestimmt werden, die beispielsweise von einer Umfeldsensorik ermittelt wird, die z.B. Radarsensoren und/oder Ultraschallsensoren und/oder Kameras usw. umfasst. Bei einer möglichen Ausführungsform kann beispielsweise überprüft werden, ob sich die extrahierten Merkmale zu einem bestimmten Zeitpunkt und/oder über einen bestimmten Zeitraum innerhalb des auslöserelevanten Bereichs befinden. Bei der Merkmalsextraktion können ein erstes Integral und/oder ein zweites Integral und/oder Fensterintegrale von unterschiedlicher Zeitdauer und/oder Betragsintegrale und/oder Maximalwerte und/oder Minimalwerte der Verzögerung und/oder Beschleunigung berechnet und als relevante Merkmale bestimmt werden.

In vorteilhafter Weise kann zur Plausibilitätsüberprüfung ein zentraler Beschleunigungssensor eines Airbagsteuergerätes ausgewertet werden.

Zur Erzeugung der Sensordaten können in vorteilhafter Weise mindestens zwei in einem Stoßfänger angeordnete Sensoren verwendet werden, die auch als Upfrontsensoren mitbenutzt werden können.

Bei einer besonders vorteilhaften Ausführungsform ist die Auswerte- und Steuereinheit in das Airbagsteuergerät integriert, da hier Signale von einem CAN-Bussystem und auch die Beschleunigungsinformation von einem zentralen Beschleunigungssensor in.einfacher Weise zur Verfügung sehen.

### Zeichnung

Ein Ausführungsbeispiel der Erfindung ist in der Zeichnung dargestellt und wird in der nachfolgenden Beschreibung näher erläutert.

Es zeigen
Figur 1 ein Blockschaltbild der erfindungsgemäßen Vorrichtung, und
Figur 2 schematischer Verlauf eines Merkmals bei verschiedenen Objekten die mit 20km/h mittig die Fahrzeugfront treffen.

### Beschreibung

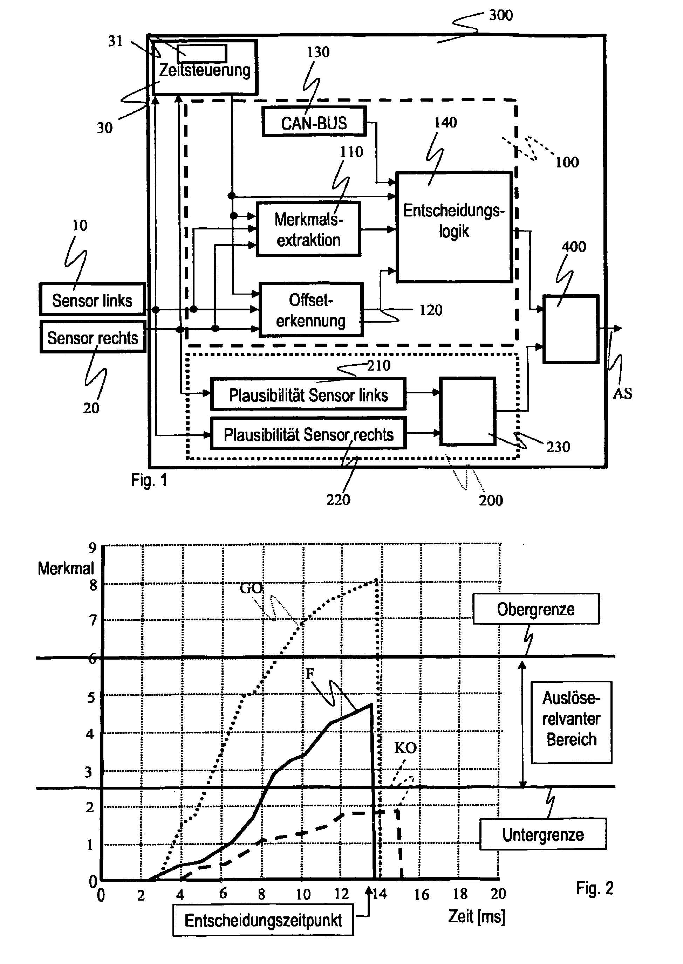

Wie aus Fig. 1 ersichtlicht ist, umfasst das dargestellte Ausführungsbeispiel eine Vorrichtung zur Erzeugung eines Auslösesignals AS für eine Fußgängerschutzvorrichtung zwei Beschleunigungssensoren 10, 20, die in vorteilhafter Weise in einen Stoßfänger eingebaut sind, da bei diesem Sensoreinbauort eine Unterscheidung von Fußgängerkollisionen zu Fahrten auf Schlechtwegstrecken oder Überfahren von Bordsteinen und Schlaglöcher besonders zuverlässig möglich ist. Das erfindungsgemäße Verfahren kann aber mit anderen Sensoren wie z.B. Klopfsensoren angewandt werden. Außerdem ist eine Erweiterung der Vorrichtung auf mehr als zwei Sensoren möglich.

Wie weiter aus Fig. 1 ersichtlich ist, umfasst eine Auswerte- und Steuereinheit 300 eine Zeitsteuerung 30, eine Auslöseeinheit 100, eine Plausibilitätseinheit 200 und eine Ausgabeeinheit 400. Die wesentlichen Blöcke der Auslöseeinheit zur Ausführung der Auslöseüberprüfung sind Mittel zur Merkmalsextraktion 110, Mittel zur Offseterkennung 120 und eine Entscheidungslogik 140. Zusätzlich wertet die Entscheidungslogik 140 Signale aus, beispielsweise eine Fahrzeugeigengeschwindigkeit, die von einem CAN-Bussystem 130 zur Verfügung gestellt werden. Der Auslöseeinheit 100 ist eine Zeitsteuerung 30 vorgeschaltet, welche die Sensordaten dahingehend überprüft, ob eine normale Fahrsituation oder ob eine so starke Verzögerung und/oder Beschleunigung vorliegt, wie sie nur von einer Kollision mit einem Objekt herrühren kann. Dazu wird in der einfachsten Form die Beschleunigung und/oder Verzögerung der Sensoren 10, 20 mit einer Schwelle, der so genannten Rauschschwelle verglichen. Wird von einem Sensor 10, 20 eine so starke Beschleunigung oder Verzögerung registriert, dass sie nicht von einer Schlechtwegstrecke, einer Bordstein- oder Schlaglochüberfahrt oder ähnlichem herrühren kann, so wird von der Zeitsteuerung 30 die Auslöseeinheit 100 aktiviert. Außerdem startet die Zeitsteuerung zu diesem Zeitpunkt einen Zähler 31, der in der Auslöseeinheit 100 dafür benutzt werden kann, zu einem bestimmten Zeitpunkt nach Aktivierung der Auslöseinheit 100, eine Entscheidung zu treffen. Außerdem kann durch diesen Zähler 31 ein Rücksetzverhalten gesteuert werden, welches dafür sorgt, dass die Auslöseeinheit 100 und ihre Komponenten in den Ausgangszustand zurückgeführt werden, wenn keine Auslösung der Fußgängerschutzmittel bei der erkannten gegenwärtigen Kollision erforderlich ist. Alternativ zum oben erwähnten Überschreiten der Rauschschwelle eines Sensors 10, 20 können auch komplexere Auslösekriterien benutzt werden, beispielsweise kann die Summe aus den Werten beide Sensoren 10, 20 mit einer vorgegebenen Schwelle verglichen werden, oder es kann ein Fensterintegral aus den Werten der Sensor 10, 20 mit einer vorgegebenen Schwelle verglichen werden.

Nach der Aktivierung der Auslöseeinheit 100 durch die Zeitsteuerung 30 führen die Mittel zur Merkmalsextraktion 110 eine Extraktion von verschiedenen Merkmalen, beispielsweise durch Berechnung eines ersten Integrals und/oder eines zweiten Integrals und/oder von Fensterintegralen mit unterschiedlicher Zeitdauer und/oder von Betragsintegralen und/oder von Maximalwerten und/oder von Minimalwerten der Verzögerung und/oder der Beschleunigung durch, und stellen das Ergebnis der Entscheidungslogik 140 zur Verfügung. Wird von der Zeitsteuerung 30 ein Rücksetzsignal initiiert, dann werden die Werte der verschiedenen Merkmale und Integrale wieder auf null zurückgesetzt.

Gleichzeitig zur Merkmalsextraktion wird durch die Mittel zur Offseterkennung 120 durch Vergleich der Signale des linken und des rechten Sensors 10, 20 ermittelt, ob die erkannt Kollision zentral oder versetzt zur Mitte der Fahrzeugfront erfolgt ist. Die Entscheidung ob ein Offset vorliegt, kann mit Hilfe einer Auswertung der Amplitude einer Verzögerungsspitze oder aber basierend auf Größen wie dem ersten Integral oder dem zweiten Integral der Beschleunigung der einzelnen Sensoren 10, 20 oder einem ersten Integral des Absolutwertes der Beschleunigung der einzelnen Sensoren 10, 20 erfolgen. Die Information, ob ein Offset vorliegt, und wenn ja an welcher Stelle, wird der Entscheidungslogik 140 zur Verfügung gestellt.

Die Entscheidungslogik 140 trifft basierende auf den Informationen der Zeitsteuerung 30, der Mittel zur Merkmalsextraktion 110, der Mittel zur Offseterkennung 120 und optional der Fahrzeugeigengeschwindigkeit, die vom CAN-Bussystem 130 zur Verfügung gestellt wird, eine vorläufige Auslöseentscheidung. Dazu wird zuerst der Zähler 31 betrachtet, der die Zeitdauer misst, die seit der Aktivierung der Auslöseinheit 100 verstrichen ist. Erreicht oder überschreitet der Zählerstand einen vorgegebenen Wert, der beispielsweise durch einen Parameter genau definiert ist, so trifft die Entscheidungslogik 140 die Entscheidung, ob die vorliegende Kollision eine Kollision mit einem Fußgänger ist, die zu einer Aktivierung der Schutzmittel führen kann. Hierzu müssen Kollisionen mit Fußgängern, bei denen die Schutzmittel aktiviert werden sollen, von schwächeren Kollisionen wie z.B. mit Steinen, Leitpfosten usw., bei denen keine Aktivierung der Schutzmittel erfolgen soll, unterschieden werden. Gleichzeitig muss eine Kollision mit einem Fußgänger aber auch von stärkeren Kollisionen, beispielsweise mit einem Stahlpfosten, oder einem anderen Fahrzeug unterschieden werden. Hierzu werden die verschiedenen extrahierten Merkmale wie z.B. das erste Integral der Verzögerung, zu dem Zeitpunkt der Entscheidung mit einer Unter-und einer Obergrenze verglichen, siehe Fig. 2. Die Ober- und Untergrenzen für die verschiedenen Merkmale können dabei von der Fahrzeugeigengeschwindigkeit und der erkannten Aufprallstelle abhängig sein. Die entsprechende Grenze kann beispielsweise durch einen Vergleich mit einer so genannten Look-Up-Tabelle ermittelt werden, in der verschiedene Werte für die veränderbaren Parameter abgelegt sind, denen bestimmte Werte für die Obergrenzen und/oder Untergrenzen zugeordnet sind. Zum Entscheidungszeitpunkt werden die verschiedenen Merkmale mit der vorgegebenen Ober- und Untergrenze verglichen und entsprechende Flags gesetzt, wenn das jeweilige Merkmal in einem auslöserelevanten Bereich liegt, also zwischen der Ober- und Untergrenze. Für jedes Merkmal kann ein solches Flag generiert werden. Diese generierten Flags können in der Entscheidungslogik 140 durch logische Operationen verknüpft werden, im einfachsten Fall durch eine logische UND-Verknüpfung, um ein Ausgabesignal für die vorläufige Auslöseentscheidung auszugeben.

Alternativ zum Vergleich der extrahierten Merkmale zu einem bestimmten Zeitpunkt, kann ein Verfahren angewendet werden, bei dem einige oder alle Merkmale über einen längeren Zeitraum mit zeitabhängigen Ober- und Untergrenzen verglichen werden.

Fig. 2 zeigt Merkmalskennlinien von drei verschiedenen Objekten die mit einer gegebenen Geschwindigkeit, beispielsweise 20km/h mittig auf die Fahrzeugfront auftreffen. Eine gepunktete Merkmalskennlinie GO repräsentiert ein großes Objekt, beispielsweise einen Metallpfosten, die durchgezogene Merkmalskennlinie F repräsentiert einen Fußgänger und die gestrichelte Kennlinie KO repräsentiert ein kleines Objekt. Die eingezeichnete Obergrenze und Untergrenze ergeben sich beispielsweise aus den Randbedingungen Fahrzeugeigengeschwindigkeit und Aufprallpunkt auf dem Fahrzeug. Wie aus Fig. 2 ersichtlich ist befindet sich zum Entscheidungszeitpunkt nur die Kennlinie F innerhalb der oberen und unteren Grenze, so dass die Auslöseinheit 100 nur für diesen Fall eine vorläufige positive Auslöseentscheidung treffen würde, d.h. es wird ein Flag gesetzt, welches die vorläufige positive Auslöseentscheidung repräsentiert, und die Fußgängerschutzvorrichtung wird aktiviert, wenn die Plausibilitätsprüfung ebenfalls ein positives Ergebnis liefert. Die Kennlinie GO befindet sich oberhalb der Obergrenze und die Kennlinie KO befindet sich unterhalb der Untergrenze, so dass die Auslöseeinheit für diese beiden Fälle eine negative Auslöseentscheidung treffen würde, d.h. das Auslöseflag wird nicht gesetzt und die Fußgängerschutzvorrichtung wird unabhängig von der Plausibilitätsprüfung nicht aktiviert.

Parallel zur Auslöseinheit 100 arbeitet die Plausibilitätseinheit 200, in der die einzelnen Sensorsignale dahingehend ausgewertet werden, ob die an den Sensoren 10, 20 anliegenden Signale plausibel sind oder nicht. Die Plausibilitätseinheit umfasst Mittel 210 zur Überprüfung der Plausibilität des ersten Sensors 10 und Mittel 220 zur Überprüfung der Plausibilität des zweiten Sensors 20. In einer Entscheidungseinheit 230, die beispielsweise als UND-Gatter ausgeführt ist, wird eine positive Plausibilität festegestellt, wenn die Signale beider Sensoren 10,20 plausibel sind. Zusätzlich oder alternativ kann zur Plausibilitätsprüfung ein Beschleunigungssignal eines zentralen Beschleunigungssensors benutzt werden, der beispielsweise im Airbagsteuergerät angeordnet ist. Ergibt die Überprüfung, dass eine Kollision mit einem Objekt plausibel ist, dann wird ein Plausibilitätsflag gesetzt, d.h. die Plausibilitätsprüfung liefert ein positives Ergebnis.

Das Plausibilitätsflag wird gemeinsam mit dem Flag, welches die vorläufige Auslöseentscheidung repräsentiert, an die Ausgabeeinheit 400 ausgegeben, welche das Auslöseflag mit dem Plausibilitätsflag verknüpft, beispielsweise über eine logische UND-Verknüpfung, um so ein plausibles Auslöseentscheidungssignal AS zu erzeugen, das zur Ansteuerung der Fußgängerschutzmittel genutzt wird.

Bei einer nicht dargestellten Ausführungsform kann das erfindungsgemäße Verfahren im Airbagsteuergerät implementiert werden, da hier die CAN-Signale, und auch die Beschleunigungsinformation vom zentralen Beschleunigungssensor in einfacher Weise zur Verfügung stehen. Es ist aber auch eine Realisierung in einem eigenen Steuergerät denkbar.

Das hier beschriebene Verfahren ist in einfacher Weise auf mehrere Beschleunigungssensoren erweiterbar.

## Patentansprüche

1. Verfahren zur Erzeugung eines Auslösesignals (AS) für eine Fussgängerschutzvorrichtung, bei welchem Sensordaten ermittelt und ausgewertet werden, wobei eine Kollision mit dem Objekt **dadurch** erkannt wird, dass die Sensordaten, welche eine Beschleunigung repräsentieren, eine vorgegebene Schwelle übersteigen, **dadurch gekennzeichnet, dass** nach einer erkannten Kollision mit einem Objekt eine Auslöseüberprüfung und eine Plausibilitätsprüfung der Sensordaten durchgeführt werden, wobei bei der Auslöseüberprüfung zur Erkennung eines Fussgängers mit den Sensordaten eine Merkmalsextraktion (110) und eine Offseterkennung (120) ausgeführt werden, welche einen Auftreffpunkt des Objekts bestimmt, wobei das Auslösesignal (AS) für die Fussgängerschutzvorrichtung erzeugt wird, wenn bei der Auslöseüberprüfung eine Kollision mit einem Fussgänger erkannt wird und die Plausibilitätsprüfung der Sensordaten positiv ist.

2. Verfahren nach Anspruch 1, **dadurch gekennzeichnet, dass** bei der Auslöseüberprüfung ein Zählerstand berücksichtigt wird, der die Zeitdauer seit dem Zeitpunkt der erkannten Kollision misst.

3. Verfahren nach Anspruch 1 oder 2, **dadurch gekennzeichnet, dass** die Kollision mit einem Fussgänger **dadurch** erkannt wird, dass sich die extrahierten Merkmale (GO, F, KO) in einem auslöserelevanten Bereich befinden, dessen Obergrenze und/oder Untergrenze durch die Offseterkenhung (120) und/oder den Zählerstand und/oder eine Fahrzeugeigengeschwindigkeit und/oder eine Relativgeschwindigkeit bestimmt werden.

4. Verfahren nach Anspruch 3, **dadurch gekennzeichnet, dass** eine Kollision mit einem Fussgänger **dadurch** erkannt wird, dass sich die extrahierten Merkmale (F) zu einem bestimmten Zeitpunkt und/oder über einen bestimmten Zeitraum innerhalb des auslöserelevanten Bereichs befinden.

5. Verfahren nach einem der Ansprüche 1 bis 4, **dadurch gekennzeichnet, dass** bei der Merkmalsextraktion (110) ein erstes integral und/oder ein zweites Integral und/oder Fensterintegrale von unterschiedlicher Zeitdauer und/oder Betragsintegrale und/oder Maximalwerte und/oder Minimalwerte der Verzögerung und/oder Beschleunigung berechnet Werden.

6. Verfahren nach einem der Ansprüche 1 bis 5, **dadurch gekennzeichnet, dass** zur Plausibilitätsüberprüfung ein zentraler Beschleunigungssensor eines Airbagsteuergerätes ausgewertet wird.

7. Verfahren nach einem der Ansprüche 1 bis 6, **dadurch gekennzeichnet, dass** mindestens zwei in einem Stossfänger angeordnete Sensoren (10, 20) die Sensordaten erzeugen.

8. Vorrichtung zur Erzeugung eines Auslösesignals (AS) für eine Fussgängerschutzvorrichtung, mit mehreren Beschleunigungssensoren (10, 20) zur Erzeugung von Sensordaten, zur Durchführung des Verfahrens nach einem der Ansprüche 1 bis 7, **gekennzeichnet durch** eine Auswerte- und Steuereinheit (300) die zur Auswertung der Sensorsignale eine Zeitsteuerung (30), eine Plausibilitätseinheit (200) und eine Auslöseeinheit (100) umfasst, wobei die Zeitsteuerung (30) nach einer erkannten Kollision mit einem Objekt die Auslöseinheit (100) zur Durchführung einer Auslöseüberprüfung aktiviert, welche Mittel zur Merkmalsextraktion (110) und Mittel zur Offseterkennung (120) und eine Entscheidungslogik (130) umfasst, wobei die Auswerte- und Steuereinheit (300) das Auslösesignal (AS) für die Fussgängerschutzvorrichtung erzeugt, wenn bei der Auslöseüberprüfung eine Kollision mit einem Fussgänger erkannt wird und die von der Plausibilitätseinheit (200) durchgeführte Plausibilitätsüberprüfung der Sensordaten positiv ist.

9. Vorrichtung nach Anspruch 8, **dadurch gekennzeichnet, dass** die Auswerte- und Steuereinheit (300) in einem Airbagsteuergerät integriert ist.

## Claims

1. Method for generating a triggering signal (AS) for a device protecting pedestrians, in which sensor data are determined and evaluated, a collision with the object being detected by virtue of the sensor data which represent an acceleration exceeding a predefined threshold, **characterized in that**, after a collision with an object has been detected, a triggering check and a plausibility check of the sensor data are carried out, feature extraction (110) and offset detection (120), which determines a point of impact of the object, being carried out with the sensor data during the triggering check for the purpose of detecting a pedestrian, the triggering signal (AS) for the device protecting pedestrians being generated if a collision with a pedestrian is detected during the triggering check and the plausibility check of the sensor data is positive.

2. Method according to Claim 1, **characterized in that** a counter reading which measures the length of time since the time at which the collision was detected is taken into account during the triggering check.

3. Method according to Claim 1 or 2, **characterized in that** the collision with a pedestrian is detected by virtue of the extracted features (GO, F, KO) being in a range which is relevant to triggering and the upper limit and/or lower limit of which is/are determined by the offset detection (120) and/or the counter reading and/or the vehicle's own speed and/or a relative speed.

4. Method according to Claim 3, **characterized in that** a collision with a pedestrian is detected by virtue of the extracted features (F) being inside the range which is relevant to triggering at a particular point in time and/or over a particular period of time.

5. Method according to one of Claims 1 to 4, **characterized in that** a first integral and/or a second integral and/or window integrals of different duration and/or absolute value integrals and/or maximum values and/or minimum values of deceleration and/or acceleration is/are calculated during feature extraction (110).

6. Method according to one of Claims 1 to 5, **characterized in that** a central acceleration sensor of an airbag control device is evaluated for the plausibility check.

7. Method according to one of Claims 1 to 6, **characterized in that** at least two sensors (10, 20) which are arranged in a bumper generate the sensor data.

8. Apparatus for generating a triggering signal (AS) for a device protecting pedestrians, having a plurality of acceleration sensors (10, 20) for generating sensor data, for carrying out the method according to one of Claims 1 to 7, **characterized by** an evaluation and control unit (300) which comprises a time controller (30), a plausibility unit (200) and a triggering unit (100) for evaluating the sensor signals, the time controller (30) activating the triggering unit (100) for the purpose of carrying out a triggering check after a collision with an object has been detected, said triggering unit comprising means for feature extraction (110) and means for offset detection (120) and a decision logic unit (130), the evaluation and control unit (300) generating the triggering signal (AS) for the device protecting pedestrians if a collision with a pedestrian is detected during the triggering check and the plausibility check of the sensor data which is carried out by the plausibility unit (200) is positive.

9. Apparatus according to Claim 8, **characterized in that** the evaluation and control unit (300) is integrated in an airbag control device.

## Revendications

1. Procédé pour générer un signal de déclenchement (AS) pour un dispositif de protection des piétons selon lequel, on détermine et on exploite des données de capteur, et
on reconnaît une collision avec un objet en ce que les données de capteur représentant une accélération, dépasse un seuil prédéfini;
**caractérisé en ce qu'**
après une collision reconnue avec un objet, on effectue un contrôle de déclenchement et un contrôle de plausibilité des données de capteur, et,
lors du contrôle de déclenchement pour reconnaître un piéton avec des données de capteur, on effectue une extraction de caractéristiques (110) et une reconnaissance de décalage (120) qui définissent le point d'impact de l'objet, et
le signal de déclenchement (AS) est généré pour le dispositif de protection des piétons si lors du contrôle de déclenchement, une collision avec un piéton est reconnue et si le contrôle de plausibilité des données de capteur est positif.

2. Procédé selon la revendication 1,
**caractérisé en ce que**
pour un contrôle de déclenchement, on tient compte d'un état de comptage qui mesure la durée depuis l'instant de la collision reconnue.

3. Procédé selon la revendication 1 ou 2,
**caractérisé en ce qu'**
on reconnaît la collision avec un piéton **en ce que** les caractéristiques extraites (GO, F, KO) se trouvent dans une plage déterminant le déclenchement et dont la limite supérieure et/ou la limite inférieure sont déterminées par la détection de décalage (120) et/ou par l'état de comptage et/ou par une vitesse propre du véhicule et/ou une vitesse relative.

4. Procédé selon la revendication 3,
**caractérisé en ce qu'**
on reconnaît une collision avec un piéton **en ce que** les caractéristiques extraites (F) à un instant donné et/ou sur une période déterminée se trouvent à l'intérieur de la plage déterminante pour le déclenchement.

5. Procédé selon les revendications 1 à 4,
**caractérisé en ce que**
pour l'èxtraction de caractéristiques (110) on calcule une première intégrale et/ou une seconde intégrale et/ou une intégrale de fenêtre de durée différente et/ou d'amplitude différente et/ou des valeurs maximale et/ou minimales de la décélération et/ou de l'accélération.

6. Procédé selon les revendications 1 à 5,
**caractérisé en ce que**
pour le contrôle de la plausibilité, on exploite un capteur central d'accélération d'un appareil de commande de coussin gonflable.

7. Procédé selon les revendications 1 à 6,
**caractérisé en ce qu'**
au moins deux capteurs (10, 20) installés dans un pare-chocs génèrent les données de capteur.

8. Dispositif pour générer un signal de déclenchement (AS) d'un dispositif de protection de piétons comportant plusieurs capteurs d'accélération (10, 20) pour générer des données de capteur, pour effectuer le procédé selon l'une des revendications 1 à 7,
**caractérisé par**
une unité d'exploitation et de commande (300) qui comprend pour l'exploitation des signaux de capteur, une commande de temps (30), une unité de contrôle de plausibilité (200) et une unité de déclenchement (100),
la commande de temps (30) activant après avoir reconnu la collision avec un objet, l'unité de déclenchement (100) pour effectuer un contrôle de déclenchement, comprenant des moyens pour l'extraction de caractéristiques (110) et des moyens de détection de décalage (120) ainsi qu'une logique de décision (130), l'unité d'exploitation et de commande (300) générant le signal de déclenchement (AS) du dispositif de protection de piétons si lors du contrôle de déclenchement, on reconnaît une collision avec un piéton et si le contrôle de plausibilité effectué par l'unité de contrôle de plausibilité (200) sur les données de capteur donne un résultat positif.

9. Dispositif selon la revendication 8,
**caractérisé en ce que**
l'unité d'exploitation et l'unité de commande (300) sont intégrées dans un appareil de commande de coussin gonflable.
